# EUROPEAN PATENT APPLICATION

(11) **EP 4 783 644 A1**
(43) Date of publication of application: **29.07.2026**
(21) Application number: 23956699.5
(22) Date of filing: 29.12.2023
(51) Int. Cl.: H04W 24/02

(54) **BATTERY MANAGEMENT SYSTEM AND METHOD FOR ADAPTIVE OPTIMAL-CHANNEL WIRELESS COMMUNICATION**

(30) Priority: 26.10.2023 CN 202311405810
(71) Applicant: Sungiant Automotive Electronics Co., Ltd., Shenzhen, Guangdong 518101 (CN)
(72) Inventor: XU, Tonghui, Shenzhen, Guangdong 518107 (CN); CHEN, Binbin, Shenzhen, Guangdong 518107 (CN)
(74) Representative: Metida
(86) International application number: PCT/CN2023/143009
(87) International publication number: WO 2025/086464

(57) **Abstract**

The present application relates to the technical field of battery management, and in particular, to a battery management system and method for adaptive optimal-channel wireless communication. The system includes a plurality of control boards. A wireless communication module in each control board includes at least a first wireless communication unit and a second wireless communication unit that are connected to each other. In any of the control boards, the first wireless communication unit is configured to acquire a system wireless communication channel combination for a current period based on channel information of all communication channels between the first wireless communication unit and all signal receiving terminals in communication with the first wireless communication unit. The second wireless communication unit is configured to: in response to that communication between the second wireless communication unit and all the signal receiving terminals is in a normal communication state, transmit wireless communication interaction information to all the signal receiving terminals through a current optimal target channel determined in the system wireless communication channel combination. The present application not only dynamically selects an optimal channel for communication based on real-time channel conditions, but also effectively addresses data verification and exception retransmission issues. This ensures data integrity during transmission, better adapts to the time-varying nature and complexity of channels, and enhances communication efficiency and reliability.

## Description

### CROSS REFERENCE TO RELATED APPLICATION

The present application claims priority to Chinese Patent Application No. 202311405810.0, filed with the China National Intellectual Property Administration on October 26, 2023 and entitled "BATTERY MANAGEMENT SYSTEM AND METHOD FOR ADAPTIVE OPTIMAL-CHANNEL WIRELESS COMMUNICATION", which is incorporated herein by reference in its entirety.

### TECHNICAL FIELD

The present application relates to the technical field of battery management, and in particular, to a battery management system and method for adaptive optimal-channel wireless communication.

### BACKGROUND

In modem wireless communications, selecting an appropriate channel for communication is a critical issue. Due to the time-varying nature and complexity of channels, conventional communication methods that adopt preset channels cannot guarantee communication quality and stability across all time periods. Furthermore, current wireless communication technologies primarily employ random channels, which makes it impossible to select an optimal channel for communication in one step. Moreover, wireless communications are often affected by environmental factors such as noise, reflections, and multipath interference, which further degrade communication quality and reliability. In addition, conventional wireless communication schemes lack the capability to periodically verify the rationality of communication data and the technical means to rapidly switch to another channel for data retransmission when anomalies are detected in a single node. As a result, these systems are unable to effectively address environmental interference and data verification issues. Therefore, there is an urgent need for an adaptive optimal-channel wireless communication technology to enhance communication stability and reliability.

### SUMMARY

The present application provides a battery management system and method for adaptive optimal-channel wireless communication, addressing the technical problem that conventional communication systems using preset channels cannot effectively handle environmental interference and data verification issues, thereby failing to ensure communication stability and reliability.

To resolve the above technical problem, the present application provides a battery management system and method for adaptive optimal-channel wireless communication.

According to a first aspect, the present application provides a battery management system for adaptive optimal-channel wireless communication, including: a plurality of control boards, where each of the plurality of control boards includes a control unit, and a channel analysis storage unit and a wireless communication module that are both connected to the control unit, and the wireless communication module includes at least a first wireless communication unit and a second wireless communication unit that are connected to each other; and in any of the control boards,

the first wireless communication unit is configured to: acquire a system wireless communication channel combination for a current period based on channel information of all communication channels between the first wireless communication unit and all signal receiving terminals in communication with the first wireless communication unit, and send the system wireless communication channel combination to the second wireless communication unit, where the system wireless communication channel combination includes at least an optimal wireless communication channel; and
the second wireless communication unit is configured to: in response to that communication between the second wireless communication unit and all the signal receiving terminals is in a normal communication state, determine a current optimal target channel in the system wireless communication channel combination, and transmit wireless communication interaction information to all the signal receiving terminals through the current optimal target channel.

In a further embodiment, the first wireless communication unit is specifically configured to:
scan all the communication channels between the first wireless communication unit and all the signal receiving terminals in communication with the first wireless communication unit, to acquire the channel information of all the communication channels; perform statistical sorting on the channel information of all the communication channels, to obtain the system wireless communication channel combination for the current period; and store the system wireless communication channel combination into the channel analysis storage unit through the control unit.

In a further embodiment, in response to that the second wireless communication unit transmits the wireless communication interaction information to any of the signal receiving terminals through the current optimal target channel, in response to that the first wireless communication unit monitors that a number of information transmission failures reaches a preset information transmission count threshold, the first wireless communication unit determines that communication between the second wireless communication unit and a current signal receiving terminal through the current optimal target channel is in an abnormal communication state, and the first wireless communication unit is further configured to:
in response to that the communication between the second wireless communication unit and the current signal receiving terminal through the current optimal target channel is in the abnormal communication state, retransmit the wireless communication interaction information to the current signal receiving terminal through the current optimal target channel.

In a further embodiment, the first wireless communication unit is further configured to:
upon monitoring that retransmission of the wireless communication interaction information to the current signal receiving terminal through the current optimal target channel fails and a retransmission count does not exceed a preset retransmission count threshold, retransmit the wireless communication interaction information to the current signal receiving terminal through the current optimal target channel; and
in response to that the retransmission count exceeds the preset retransmission count threshold, terminate transmission of the wireless communication interaction information.

In a further embodiment, the system wireless communication channel combination further includes a suboptimal wireless communication channel combination, and the suboptimal wireless communication channel combination includes a plurality of suboptimal wireless communication channels; and the control unit is configured to:
in response to that the communication between the second wireless communication unit and the current signal receiving terminal through the current optimal target channel is in the abnormal communication state and the first wireless communication unit successfully retransmits the wireless communication interaction information, control and switch an operating mode of the first wireless communication unit to a wireless communication data transmission mode, select an optimal suboptimal wireless communication channel from the suboptimal wireless communication channel combination, update the current optimal target channel to the optimal suboptimal wireless communication channel, and control the second wireless communication unit to transmit the wireless communication interaction information to the current signal receiving terminal through an updated current optimal target channel.

In a further embodiment, the system wireless communication channel combination further includes a suboptimal wireless communication channel combination, and the suboptimal wireless communication channel combination includes a plurality of suboptimal wireless communication channels; and the first wireless communication unit is further configured to:
in response to that the second wireless communication unit transmits the wireless communication interaction information through the current optimal target channel, select, at periodic intervals, an optimal suboptimal wireless communication channel from the suboptimal wireless communication channel combination as a verification channel, and periodically transmit the wireless communication interaction information to all the signal receiving terminals through the verification channel, to perform a comparison check on the wireless communication interaction information transmitted by the second wireless communication unit through the current optimal target channel against the wireless communication interaction information transmitted by the first wireless communication unit through the verification channel.

In a further embodiment, the plurality of control boards include a primary control board and/or secondary control boards, communication between the primary control board and the secondary control boards employs a preset communication method, and the preset communication method includes a broadcast communication method and a point-to-point communication method.

According to a second aspect, the present application provides a battery management method for adaptive optimal-channel wireless communication, applied to the battery management system for adaptive optimal-channel wireless communication, and including following steps:
acquiring, by a first wireless communication unit, a system wireless communication channel combination for a current period based on channel information of all communication channels between the first wireless communication unit and all signal receiving terminals in communication with the first wireless communication unit, where the system wireless communication channel combination includes at least an optimal wireless communication channel; and
in response to that communication between a second wireless communication unit and all the signal receiving terminals is in a normal communication state, determining, by the second wireless communication unit, a current optimal target channel in the system wireless communication channel combination, and transmitting, by the second wireless communication unit, wireless communication interaction information to all the signal receiving terminals through the current optimal target channel.

According to a third aspect, the present application further provides a computer device, including a processor and a memory, where the processor is connected to the memory, the memory is configured to store a computer program, and the processor is configured to execute the computer program stored in the memory, to enable the computer device to perform steps of the above method.

According to a fourth aspect, the present application further provides a computer-readable storage medium, storing a computer program, where when executed by a processor, the computer program implements steps of the above method.

The present application provides a battery management system and method for adaptive optimal-channel wireless communication. The system includes a plurality of control boards. Each control board includes a control unit, and a channel analysis storage unit and a wireless communication module that are both connected to the control unit. The wireless communication module includes at least a first wireless communication unit and a second wireless communication unit that are connected to each other. In any of the control boards, the first wireless communication unit is configured to: acquire a system wireless communication channel combination for a current period based on channel information of all communication channels between the first wireless communication unit and all signal receiving terminals in communication with the first wireless communication unit, and send the system wireless communication channel combination to the second wireless communication unit. The second wireless communication unit is configured to: when in a normal communication state, determine a current optimal target channel in the system wireless communication channel combination, and transmit wireless communication interaction information to all the signal receiving terminals through the current optimal target channel. The system employs at least two wireless communication units, enabling better adaptation to the time-varying nature and complexity of channels. It dynamically selects the optimal wireless communication channel for communication, thereby enhancing communication quality and stability. In addition, the system effectively addresses environmental interference and periodic data verification issues. When node communication anomalies occur, the system promptly switches to a suboptimal channel for data retransmission, thereby preventing data loss or errors and further strengthening communication stability and reliability.

### BRIEF DESCRIPTION OF THE DRAWINGS

FIG. 1 is a block diagram of a battery management system for adaptive optimal-channel wireless communication according to an embodiment of the present application;
FIG. 2 is an internal schematic diagram of a battery management system according to an embodiment of the present application;
FIG. 3 is a schematic diagram of internal connection of a control board according to an embodiment of the present application;
FIG. 4 is a schematic flowchart of transmission logic for wireless communication data according to an embodiment of the present application;
FIG. 5 is a schematic flowchart of a battery management method for adaptive optimal-channel wireless communication according to an embodiment of the present application; and
FIG. 6 is a schematic structural diagram of a computer device according to an embodiment of the present application.

### DETAILED DESCRIPTION

The embodiments of the present application are described in detail below with reference to the accompanying drawings. The provided embodiments are solely for illustrative purposes and should not be construed as a limitation to the present application. The accompanying drawings are for reference and illustration only and do not constitute a limitation to the patent protection scope of the present application, as many modifications may be made without departing from the scope of the present application.

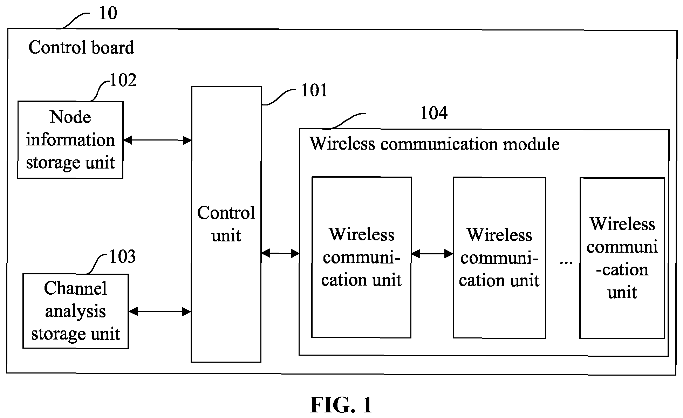

Referring to FIG. 1, an embodiment of the present application provides a battery management system for adaptive optimal-channel wireless communication. As shown in FIG. 1, the system includes a plurality of control boards 10. Each control board 10 includes a control unit 101, and a node information storage unit 102, a channel analysis storage unit 103, and a wireless communication module 104 that are all connected to the control unit. The wireless communication module 104 includes at least a first wireless communication unit and a second wireless communication unit that are connected to each other.

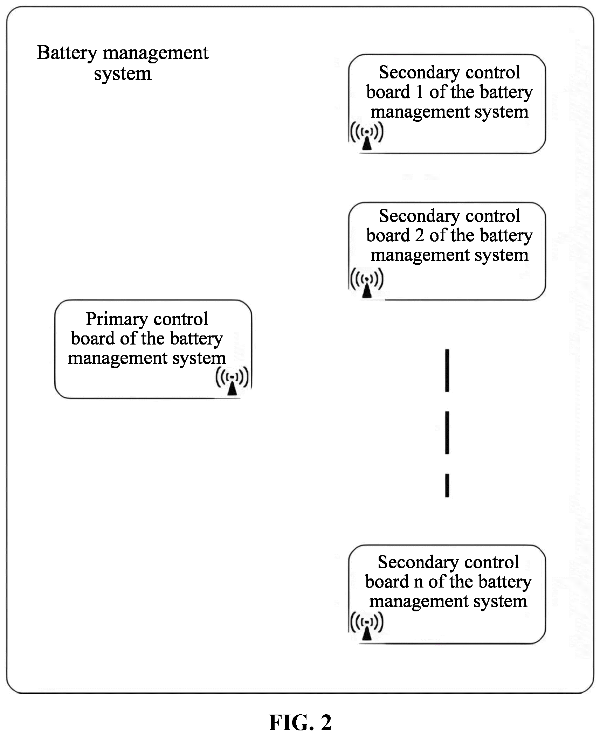

In a specific embodiment, the plurality of control boards 10 include a primary control board and/or secondary control boards. Communication between the primary control board and the secondary control boards employs a preset communication method, and the preset communication method includes a broadcast communication method and a point-to-point communication method. This embodiment is primarily described using the specific internal structure of the battery management system shown in FIG. 2 as an example. In FIG. 2, the battery management system includes one primary control board and a plurality of secondary control boards. The internal structures of the primary control board and the secondary control boards are identical, and the primary control board manages the plurality of secondary control boards. Within any battery management system, data interaction is implemented between the primary control board and the secondary control board or between the secondary control boards. For example, during data interaction between the primary control board and the secondary control board, the primary control board sends control information to the secondary control board, and the secondary control board sends battery information to the primary control board. Between different battery management systems, data interaction can also be performed between primary control boards using a redundant wireless communication unit.

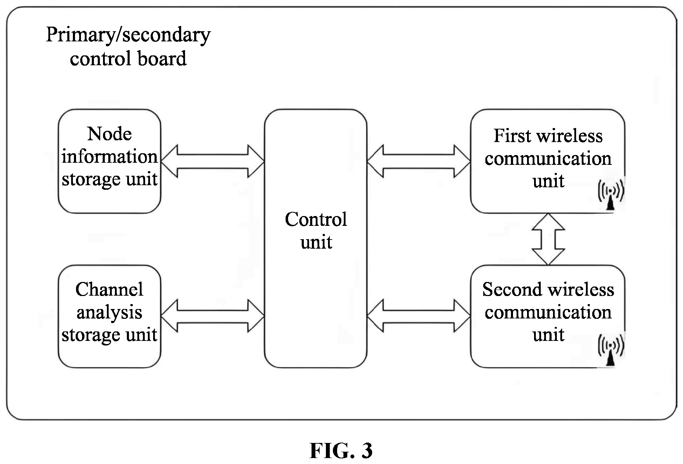

It should be noted that, to enable the battery management system to dynamically select a current optimal wireless communication channel based on changes in the channel environment and control all communication nodes to achieve synchronous frequency hopping and wireless communication, the control board in this embodiment employs the redundant wireless communication unit design to implement the adaptive optimal-channel wireless communication technology. To facilitate understanding of the adaptive optimal-channel wireless communication technology proposed in this embodiment, the following embodiment is described in detail using an example in which the control boards include dual redundant wireless communication units and the primary control board transmits data to a plurality of secondary control boards. As shown in FIG. 3, the primary control board and the secondary control boards each include a control unit, a node information storage unit, a channel analysis storage unit, and a first wireless communication unit and a second wireless communication unit that are connected to each other. The first wireless communication unit is responsible for optimal channel searching, while the second wireless communication unit is responsible for normal wireless communication data transmission and reception. Each wireless communication unit includes, but is not limited to, common wireless communication technologies such as Bluetooth and Wi-Fi.

In this embodiment, in any control board, the first wireless communication unit is configured to: acquire a system wireless communication channel combination for a current period based on channel information of all communication channels between the first wireless communication unit and all signal receiving terminals in communication with the first wireless communication unit, and send the system wireless communication channel combination to the second wireless communication unit. The system wireless communication channel combination includes at least an optimal wireless communication channel and a suboptimal wireless communication channel combination. The suboptimal wireless communication channel combination includes at least one suboptimal wireless communication channel. The channel information includes a channel signal-to-noise ratio. In this embodiment, a specific process for the first wireless communication unit to acquire the system wireless communication channel combination for the current period based on the channel information of all the communication channels between the first wireless communication unit and all the signal receiving terminals in communication with the first wireless communication unit is as follows:

The first wireless communication unit scans, based on the wireless communication mode, all the communication channels between the first wireless communication unit and all the signal receiving terminals in communication with the first wireless communication unit, acquires channel information of each communication channel respectively, and stores the channel information in the channel analysis storage unit according to a preset order (for example, a high-to-low order or a low-to-high order). Due to numerous secondary control board communication nodes, an optimal channel obtained through analysis by each secondary control board communication node is selected based on its own environment and location. To ensure the wireless communication channel is optimal for the entire system, an appropriate channel needs to be identified as the optimal solution to the wireless communication channel for the entire system. When the control board is the primary control board, the signal receiving terminals include signal receiving terminals of other control boards within the system. When the control board is a secondary control board, the signal receiving terminals include signal receiving terminals of other control boards within the system as well as signal receiving terminals of other devices besides the control boards (for example, a signal receiving terminal of a battery communication unit). Therefore, when the primary control board communicates with a plurality of secondary control board communication nodes, the control unit of the primary control board collects information of a channel between the primary control board and each secondary control board through the first wireless communication unit. The first wireless communication unit performs statistical sorting on the channel information of all the communication channels based on the statistical principles, to obtain the system wireless communication channel combination for completing wireless communication in the current period. This enables the second wireless communication unit (a wireless communication unit not responsible for optimal channel selection) to accomplish wireless communication within the entire battery management system by selecting an optimal channel. In addition, the first wireless communication unit stores the system wireless communication channel combination into the channel analysis storage unit via the control unit, facilitating subsequent data extraction by the second wireless communication unit.

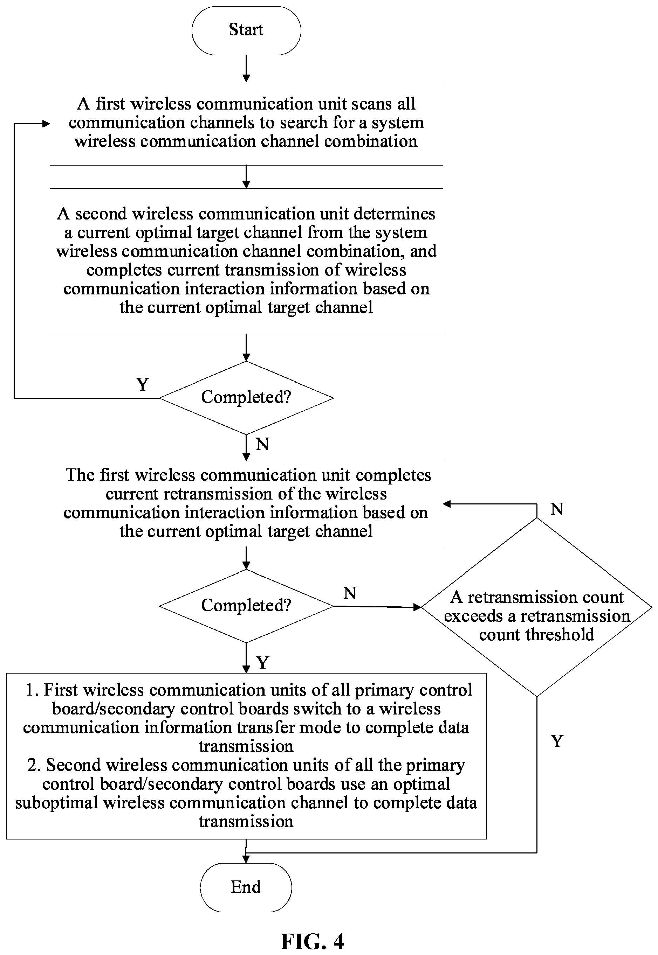

In this embodiment, the second wireless communication unit is configured to: when communication between the second wireless communication unit and all the signal receiving terminals is in a normal communication state, determine a current optimal target channel in the system wireless communication channel combination, and transmit wireless communication interaction information to all the signal receiving terminals through the current optimal target channel. The transmitted wireless communication interaction information includes, but is not limited to, collected data of a battery cell, such as battery temperature data, battery voltage data, and battery balancing information. Furthermore, in this embodiment, when the second wireless communication unit transmits the wireless communication interaction information to any of the signal receiving terminals through the current optimal target channel, in response to that the first wireless communication unit monitors that a number of information transmission failures reaches a preset information transmission count threshold, the first wireless communication unit determines that communication between the second wireless communication unit and a current signal receiving terminal through the current optimal target channel is in an abnormal communication state. For example, in this embodiment, communication of the second wireless communication unit is deemed to be in the abnormal communication state when the second wireless communication unit fails to transmit data packets three consecutive times. In this case, the first wireless communication unit is utilized to complete data retransmission. In this embodiment, the first wireless communication unit employs a point-to-point communication method to retransmit the wireless communication interaction information to the current signal receiving terminal through the current optimal target channel. Upon monitoring that retransmission of the wireless communication interaction information to the current signal receiving terminal through the current optimal target channel fails and a retransmission count does not exceed a preset retransmission count threshold, the first wireless communication unit retransmits the wireless communication interaction information again to the current signal receiving terminal through the current optimal target channel. In response to that the retransmission count exceeds the preset retransmission count threshold, transmission of the wireless communication interaction information is terminated. FIG. 4 is a schematic flowchart of the transmission logic for wireless communication data according to this embodiment.

In this embodiment, in response to that the communication between the second wireless communication unit and the current signal receiving terminal is in the abnormal communication state, the first wireless communication unit switches to the current optimal target channel for data retransmission. This not only avoids data transmission failures caused by hardware issues, but also facilitates the cause analysis of anomalies by the same channel for retransmission across different wireless communication units. This helps determine whether the anomalies occur in the communication channel or the wireless communication unit. It should be noted that in response to that data transmission is normal (that is, the communication between the second wireless communication unit and all the signal receiving terminals is in the normal communication state), the primary control board communicates with the secondary control boards using a broadcast communication method. That is, the primary control board communicates wirelessly with the plurality of secondary control board communication nodes via broadcasting. In response to that data transmission is abnormal (that is, the communication between the second wireless communication unit and the current signal receiving terminal is in the abnormal communication state), the primary control board can communicate wirelessly with the abnormal secondary control board communication node using a point-to-point communication method, to prevent interference from wireless communication of other secondary control boards on the channel.

In this embodiment, to reduce device complexity and cost while improving communication efficiency and performance, the first wireless communication unit and the second wireless communication unit share resources or devices to achieve communication functions. That is, the wireless communication channels of the first wireless communication unit and the second wireless communication unit operate within the same transmission frequency band. Consequently, the optimal and suboptimal wireless communication channels filtered out by the first wireless communication unit are also applied to the second wireless communication unit. During normal communication, the first wireless communication unit is primarily responsible for channel optimization calculations, searching for the current wireless communication channel with the optimal communication quality, and periodically performing internal wireless communication of the battery management system on a channel with suboptimal communication quality. This enables periodic verification on information transmitted over the two channels under normal communication conditions, ensuring the accuracy and rationality of the wireless communication data. The second wireless communication unit is primarily responsible for completing wireless communication data interaction between primary and secondary nodes based on the current wireless communication channel with the optimal communication quality selected by the first wireless communication unit. That is, the second wireless communication unit completes internal wireless communication information transmission of the battery management system on the current wireless communication channel with the optimal communication quality, thereby enhancing the efficiency and reliability of wireless communication through dual redundant wireless communication units. It should be noted that when searching for the current wireless communication channel with the optimal communication quality and generating the system wireless communication channel combination, the first wireless communication unit needs to simultaneously collect in real-time the actual channel signal-to-noise ratio of the second wireless communication unit used for wireless data interaction. The communication quality of the second wireless communication unit is evaluated based on the actual channel signal-to-noise ratio, to reasonably assess the reliability of the current wireless communication channel with the optimal communication quality selected by the first wireless communication unit. This allows the first wireless communication unit (the wireless communication unit responsible for optimal channel filtering) to optimize the optimal channel selection algorithm in subsequent searches based on the statistical data.

In response to that communication is abnormal, indicating that the communication between the second wireless communication unit and the current signal receiving terminal is in the abnormal state, the first wireless communication unit, responsible for optimal wireless communication channel searching, immediately switches to the current optimal channel to complete retransmission of battery information of the current node, thereby completing data interaction across the entire battery management system. In this case, in response to that the communication between the second wireless communication unit and the current signal receiving terminal through the current optimal target channel is in the abnormal communication state and the first wireless communication unit successfully retransmits the wireless communication interaction information, the control unit is configured to control and switch an operating mode of the first wireless communication unit to a wireless communication data transmission mode, select an optimal suboptimal wireless communication channel from the suboptimal wireless communication channel combination, update the current optimal target channel to the optimal suboptimal wireless communication channel, and control the second wireless communication unit to transmit the wireless communication interaction information to the current signal receiving terminal through an updated current optimal target channel.

In this embodiment, the first wireless communication unit is further configured to: in response to that the second wireless communication unit transmits the wireless communication interaction information through the current optimal target channel, select, at periodic intervals, an optimal suboptimal wireless communication channel from the suboptimal wireless communication channel combination as a verification channel, and periodically transmit the wireless communication interaction information to all the signal receiving terminals through the verification channel, to perform a comparison check on the wireless communication interaction information transmitted by the second wireless communication unit through the current optimal target channel against the wireless communication interaction information transmitted by the first wireless communication unit through the verification channel.

Specifically, during normal communication, the first wireless communication unit, after selecting the system wireless communication channels, can periodically select a second optimal wireless communication channel (that is, the optimal suboptimal wireless communication channel) from the system wireless communication channels as a verification channel. The first wireless communication unit performs data interaction by periodically transmitting the wireless communication interaction information to communication nodes of all the signal receiving terminals through the verification channel. The transmitted wireless communication interaction information is then compared with the data transmitted by the second wireless communication unit through the current optimal target channel. In other words, the first wireless communication unit regularly verifies the data transmitted by the second wireless communication unit. In this embodiment, the first wireless communication unit is also capable of transmitting and receiving the wireless communication data. For example, at 1-second intervals, the first wireless communication units of the primary control board and the secondary control boards complete a data transmission and reception cycle, and the data is compared with data of the second wireless communication unit to verify data transmission reliability.

This embodiment of the present application employs a redundant wireless communication unit design to achieve a synchronization mechanism for optimal channel calculation and wireless information transmission. One set of wireless communication units is configured to calculate and select the current optimal wireless communication channel, ensuring optimal communication quality, while another set of wireless communication units is configured to transmit wireless communication information, guaranteeing that the channel currently used for wireless information transmission is always optimal. This enhances the quality, efficiency, and reliability of wireless communication data transmission, thereby realizing adaptive optimal-channel wireless communication that better adapts to the time-varying nature and complexity of channels, and improves the success rate and efficiency of wireless communication. Furthermore, to verify the rationality of the wireless communication data, the redundant wireless communication unit design adopted in this embodiment periodically performs dual-channel wireless communication. This enables timely detection and correction of issues such as data loss or errors, ensuring data integrity and accuracy, and improving communication reliability and stability. In addition, in response to that one set of wireless communication units experiences communication abnormalities, the battery management system for adaptive optimal-channel wireless communication provided in this embodiment can quickly dispatch another set of wireless communication units to perform communication retransmission. This ensures real-time and rapid data interaction within the battery management system, prevents data transmission interruptions caused by communication anomalies, and further enhances communication stability and reliability.

This embodiment of the present application provides a battery management system for adaptive optimal-channel wireless communication. The system includes a plurality of control boards, which adopt a redundant wireless communication unit design. In any control board, the first wireless communication unit is configured to acquire a system wireless communication channel combination for a current period based on channel information of all communication channels between the first wireless communication unit and all signal receiving terminals in communication with the first wireless communication unit. The second wireless communication unit is configured to: in response to that communication between the second wireless communication unit and all the signal receiving terminals is in a normal communication state, determine a current optimal target channel in the system wireless communication channel combination, and transmit wireless communication interaction information to all the signal receiving terminals through the current optimal target channel. Compared to conventional methods using preset channels, this embodiment achieves adaptive selection of the optimal channel for communication based on real-time channel conditions, enabling better adaptation to the time-varying nature and complexity of channels, thereby improving communication efficiency and reliability. Furthermore, the adaptive optimal-channel technology provided in this embodiment addresses the issue of periodically verifying the rationality of communication data, which is unattainable in conventional wireless communication technologies, effectively reducing communication error rates and ensuring data integrity and accuracy during transmission. Additionally, in response to that communication abnormalities occur in a wireless communication unit, the system can swiftly switch to another available wireless communication unit for data retransmission, effectively handling node or channel anomalies. This enhances communication stability and reliability, offering advantages such as resistance to environmental interference, support for periodic communication data verification, and rapid data retransmission. Consequently, the wireless communication systems better adapt to complex communication environments and meet user demands for high quality, reliability, and real-time performance.

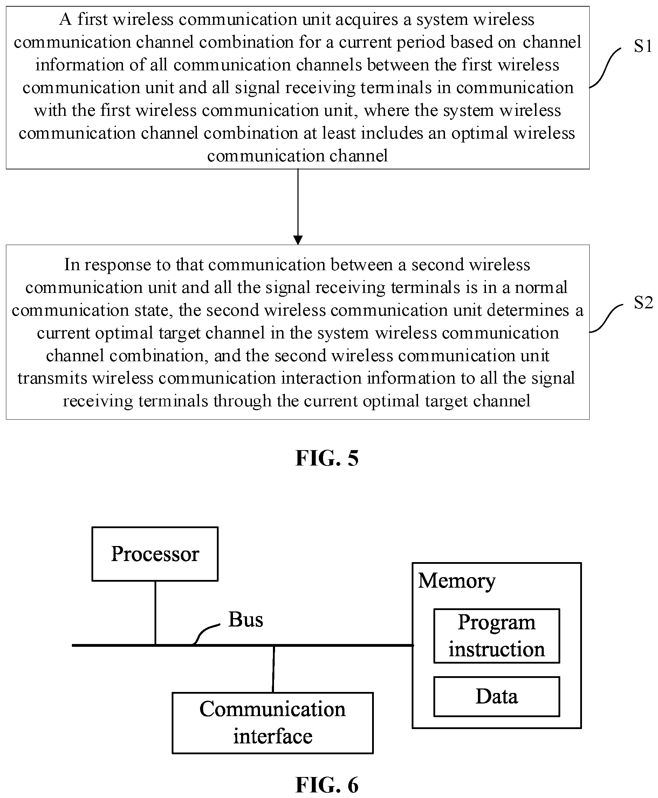

As shown in FIG. 5, an embodiment of the present application provides a battery management method for adaptive optimal-channel wireless communication, applied to the battery management system for adaptive optimal-channel wireless communication. The method includes following steps:
In S1, a first wireless communication unit acquires a system wireless communication channel combination for a current period based on channel information of all communication channels between the first wireless communication unit and all signal receiving terminals in communication with the first wireless communication unit. The system wireless communication channel combination includes at least an optimal wireless communication channel.

In S2, in response to that communication between a second wireless communication unit and all the signal receiving terminals is in a normal communication state, the second wireless communication unit determines a current optimal target channel in the system wireless communication channel combination, and transmits wireless communication interaction information to all the signal receiving terminals through the current optimal target channel.

It should be understood that, the serial number of each process does not indicate the order of performing the process. The order of performing each process should be determined by its function and internal logic, and shall not limit the implementation of the embodiments of the present application.

For specific limitations regarding the battery management method for adaptive optimal-channel wireless communication, refer to the above limitations regarding the battery management system for adaptive optimal-channel wireless communication. Details are not described herein again. Those of ordinary skill in the art may be aware that modules and algorithm steps described with reference to the embodiments disclosed in the present application can be implemented by hardware, software, or a set of both. Whether the functions are executed by hardware or software depends on particular applications and design constraints of the technical solutions. A person skilled in the art may use different methods to implement the described functions for each particular application, but it should not be considered that the implementation goes beyond the scope of the present application.

This embodiment of the present application provides a battery management method for adaptive optimal-channel wireless communication. The method includes: A first wireless communication unit acquires a system wireless communication channel combination for a current period based on channel information of all communication channels between the first wireless communication unit and all signal receiving terminals in communication with the first wireless communication unit; in response to that communication between a second wireless communication unit and all the signal receiving terminals is in a normal communication state, the second wireless communication unit determines a current optimal target channel in the system wireless communication channel combination, and transmits wireless communication interaction information to all the signal receiving terminals through the current optimal target channel. The present application employs redundant wireless communication units to achieve a synchronization mechanism for optimal channel calculation and wireless information transmission. This parallel processing approach enables more efficient data and information transmission, improving communication response speed and transmission efficiency. Furthermore, in response to that communication abnormalities occur in a wireless communication unit, the system can automatically and rapidly switch to a functional wireless communication unit, ensuring communication continuity and stability. This redundancy significantly enhances system fault tolerance and reliability, substantially improving communication quality and stability.

FIG. 6 shows a computer device according to an embodiment of the present application. The computer device includes a memory, a processor, and a transceiver that are connected through a bus. The memory is configured to store a set of computer program instructions and data and can transmit the stored data to the processor. The processor can execute the program instructions stored in the memory, to perform the steps of the method described above.

The memory may include a volatile memory, a non-volatile memory, or both. The processor may be a central processing unit, a microprocessor, an application-specific integrated circuit, a programmable logic device, or a set thereof. By way of illustrative but non-limiting examples, the aforementioned programmable logic device may be a complex programmable logic device, a field-programmable gate array, a generic array logic, or any set thereof.

Furthermore, the memory may be implemented as a physically independent component or integrated with the processor.

A person of ordinary skill in the art may understand that the structure shown in FIG. 6 is only a block diagram of a part of the structure related to the solutions of the present application and does not constitute a limitation on a computer device to which the solutions of the present application are applied. Specifically, the computer device may include more or less components than those shown in the figure, or combine some components, or have same component arrangements.

In an embodiment, the present application provides a computer-readable storage medium. The computer-readable storage medium stores a computer program, and the computer program, when executed by a processor, performs the steps of the method described above.

According to the battery management system and method for adaptive optimal-channel wireless communication provided in the embodiments of the present application, the method can not only perceive real-time channel conditions and dynamically select optimal channels for communication, but also effectively address environmental interference and data verification issues. This ensures data integrity during transmission, effectively reduces communication error rates, and further enhances the reliability, efficiency, and performance of wireless communication. The system better adapts to the time-varying nature and complexity of channels, meeting the highquality and high-efficiency requirements of modern communication.

Some or all of the functions in the foregoing embodiments may be implemented by software, hardware, firmware, or any set thereof. When software is used for implementation, the implementation can be performed in a form of a computer program product in whole or in part. The computer program product includes one or more computer instructions. When the computer program instructions are loaded and executed on a computer, the procedures or functions according to the embodiments of the present application are achieved in whole or in part. The computer may be a general-purpose computer, a dedicated computer, a computer network, or another programmable apparatus. The computer instructions may be stored in a computer-readable storage medium or may be sent from a computer-readable storage medium to another computer-readable storage medium. For example, the computer instructions may be sent from a website, computer, server, or data center to another website, computer, server, or data center in a wired (for example, a coaxial cable, an optical fiber, or a Digital Subscriber Line (DSL)) or wireless (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a Digital Video Disc (DVD)), a semiconductor medium (for example, a Solid State Disk (SSD)), or the like.

Those of ordinary skill in the art may understand that all or some of the procedures in the method of the foregoing embodiments may be implemented by a computer program instructing related hardware. The computer program may be stored in a nonvolatile computer-readable storage medium. When the computer program is executed, the procedures in the embodiments of the foregoing method may be performed.

The above embodiments are merely illustrative of several implementations of the present application, and the description thereof is more specific and detailed, but is not to be construed as a limitation to the patentable scope of the present application. It should be noted that several improvements and replacements may further be made by those of ordinary skill in the art without departing from the technical principle of the present application, and such improvements and replacements should also be deemed as falling within the protection scope of the present application. Therefore, the protection scope of the present application should be subject to the protection scope of the claims.

## Claims

1. A battery management system for adaptive optimal-channel wireless communication, comprising: a plurality of control boards, wherein each of the plurality of control boards comprises a control unit, and a channel analysis storage unit and a wireless communication module that are both connected to the control unit, and the wireless communication module comprises at least a first wireless communication unit and a second wireless communication unit that are connected to each other; and in any of the control boards,
the first wireless communication unit is configured to: acquire a system wireless communication channel combination for a current period, based on channel information of all communication channels between the first wireless communication unit and all signal receiving terminals in communication with the first wireless communication unit, and send the system wireless communication channel combination to the second wireless communication unit, wherein the system wireless communication channel combination comprises at least an optimal wireless communication channel; and
the second wireless communication unit is configured to: in response to that communication between the second wireless communication unit and all the signal receiving terminals is in a normal communication state, determine a current optimal target channel in the system wireless communication channel combination, and transmit wireless communication interaction information to all the signal receiving terminals through the current optimal target channel.

2. The battery management system for adaptive optimal-channel wireless communication according to claim 1, wherein the first wireless communication unit is configured to:
scan all the communication channels between the first wireless communication unit and all the signal receiving terminals in communication with the first wireless communication unit, to acquire the channel information of all the communication channels; perform statistical sorting on the channel information of all the communication channels, to obtain the system wireless communication channel combination for the current period; and store the system wireless communication channel combination into the channel analysis storage unit through the control unit.

3. The battery management system for adaptive optimal-channel wireless communication according to claim 1, wherein in response to that the second wireless communication unit transmits the wireless communication interaction information to any of the signal receiving terminals through the current optimal target channel, in response to that the first wireless communication unit monitors that a number of information transmission failures reaches a preset information transmission count threshold, the first wireless communication unit determines that communication between the second wireless communication unit and a current signal receiving terminal through the current optimal target channel is in an abnormal communication state, and the first wireless communication unit is further configured to:
in response to that the communication between the second wireless communication unit and the current signal receiving terminal through the current optimal target channel is in the abnormal communication state, retransmit the wireless communication interaction information to the current signal receiving terminal through the current optimal target channel.

4. The battery management system for adaptive optimal-channel wireless communication according to claim 3, wherein the first wireless communication unit is further configured to:
upon monitoring that retransmission of the wireless communication interaction information to the current signal receiving terminal through the current optimal target channel fails and a retransmission count does not exceed a preset retransmission count threshold, retransmit the wireless communication interaction information to the current signal receiving terminal through the current optimal target channel; and
in response to that the retransmission count exceeds the preset retransmission count threshold, terminate transmission of the wireless communication interaction information.

5. The battery management system for adaptive optimal-channel wireless communication according to claim 3, wherein the system wireless communication channel combination further comprises a suboptimal wireless communication channel combination, and the suboptimal wireless communication channel combination comprises at least one suboptimal wireless communication channel; and the control unit is configured to:
in response to that the communication between the second wireless communication unit and the current signal receiving terminal through the current optimal target channel is in the abnormal communication state and the first wireless communication unit successfully retransmits the wireless communication interaction information, control and switch an operating mode of the first wireless communication unit to a wireless communication data transmission mode, select an optimal suboptimal wireless communication channel from the suboptimal wireless communication channel combination, update the current optimal target channel to the optimal suboptimal wireless communication channel, and control the second wireless communication unit to transmit the wireless communication interaction information to the current signal receiving terminal through an updated current optimal target channel.

6. The battery management system for adaptive optimal-channel wireless communication according to claim 1, wherein the system wireless communication channel combination further comprises a suboptimal wireless communication channel combination, and the suboptimal wireless communication channel combination comprises at least one suboptimal wireless communication channel; and the first wireless communication unit is further configured to:
in response to that the second wireless communication unit transmits the wireless communication interaction information through the current optimal target channel, select, at periodic intervals, an optimal suboptimal wireless communication channel from the suboptimal wireless communication channel combination as a verification channel, and periodically transmit the wireless communication interaction information to all the signal receiving terminals through the verification channel, to perform a comparison check on the wireless communication interaction information transmitted by the second wireless communication unit through the current optimal target channel against the wireless communication interaction information transmitted by the first wireless communication unit through the verification channel.

7. The battery management system for adaptive optimal-channel wireless communication according to claim 1, wherein the plurality of control boards comprise a primary control board and/or secondary control boards, communication between the primary control board and the secondary control boards employs a preset communication method, and the preset communication method comprises a broadcast communication method and a point-to-point communication method.

8. A battery management method for adaptive optimal-channel wireless communication, applied to the battery management system for adaptive optimal-channel wireless communication according to any one of claims 1 to 7, and comprising following steps:
acquiring, by the first wireless communication unit, a system wireless communication channel combination for a current period based on channel information of all communication channels between the first wireless communication unit and all signal receiving terminals in communication with the first wireless communication unit, wherein the system wireless communication channel combination comprises at least an optimal wireless communication channel; and
in response to that communication between the second wireless communication unit and all the signal receiving terminals is in a normal communication state, determining, by the second wireless communication unit, a current optimal target channel in the system wireless communication channel combination, and transmitting, by the second wireless communication unit, wireless communication interaction information to all the signal receiving terminals through the current optimal target channel.

9. A computer device, comprising a processor and a memory, wherein the processor is connected to the memory, the memory is configured to store a computer program, and the processor is configured to execute the computer program stored in the memory, to enable the computer device to perform the method according to claim 8.

10. A computer-readable storage medium, storing a computer program, wherein when executed, the computer program implements the method according to claim 8.
